# EUROPÄISCHE PATENTANMELDUNG

(11) **EP 0 706 144 A2**
(43) Veröffentlichungstag der Anmeldung: **10.04.1996**
(21) Anmeldenummer: 95114610.9
(22) Anmeldetag: 16.09.1995
(51) Int. Cl.: G06K 7/08

(54) **Vorrichtung zum selektiven Auslesen von Transpondern**

(30) Priorität: 04.10.1994 DE 4435241
(71) Anmelder: Alcatel SEL Aktiengesellschaft, D-70435 Stuttgart (DE)
(72) Erfinder: Höfgen, Günther, D-70806 Kornwestheim (DE)
(74) Vertreter: Pechhold, Eberhard, Dipl.-Phys.

(57) **Zusammenfassung**

Es wird eine Vorrichtung zum Erfassen und Auslesen von relativ zu dieser Vorrichtung beweglichen Transpondern (3) angegeben, bei der zur Sicherung gegen eine Auswertung von Antworten anderer, von anderen Abfrageeinrichtungen aktivierter Transponder eine Frequenzsprungcodierung des Sendesignals erfolgt. Das frequenzsprungcodierte Sendesignal oder ein davon abgeleitetes Signal wird dem Empfangsteil (2) der Vorrichtung als Referenzsignal zugeführt und sorgt dafür, daß nur mit dem Sendesignal korrelierte Signale ausgewertet werden. Die Wechsel zwischen aufeinanderfolgenden Sprungfrequenzen erfolgen langsam. Die Zeitspanne zwischen aufeinanderfolgenden Frequenzen ist kürzer als die Länge eines Datentelegrammes.

## Beschreibung

Die Erfindung betrifft eine Vorrichtung gemäß dem Oberbegriff des Patentanspruchs 1.

Derartige Vorrichtungen werden z.B. eingesetzt, um Information zwischen ortsfesten Einrichtungen und beweglichen Objekten wie Straßen- oder Schienenfahrzeugen zu übertragen. Insbesondere zur Steuerung von spurgebundenen Fahrzeugen mit Hilfe von streckenseitigen Transpondern, die von fahrzeugseitigen Abfrageeinrichtungen ausgelesen werden, ist es erforderlich, sicherzustellen, daß nur solche Transponder ausgelesen werden, die für das jeweilige Fahrzeug bestimmte Information tragen. Es muß sicher ausgeschlossen werden, daß z.B. ein auf einem Gleis einer Eisenbahnstrecke fahrender Zug anstelle eines in diesem Gleis verlegten Transponders einen im Nachbargleis befindlichen Transponder aktiviert und ausliest und dessen Steuerungsinformation verwertet.

Hierzu können verschiedene Maßnahmen getroffen werden. Gemäß der älteren deutschen Patentanmeldung mit dem Aktenzeichen P 43 367 99.2 kann z.B. die Sende- und Empfangseinheit mit einem Laufzeitfilter ausgestattet sein, das die Auswertung eines empfangenen Signals nur dann gestattet, wenn dieses Signal innerhalb eines vorgegebenen Zeitfensters nach Aussenden des Abfragesignals empfangen wurde. Entfernt angeordnete Transponder antworten aufgrund der längeren Übertragungsstrecke auf ein Abfragesignal zu spät. Ihr Signal wird somit nicht mehr ausgewertet.

Es tritt jedoch gelegentlich der Fall auf, daß im Nachbargleis verlegte Transponder von einem auf diesem Nachbargleis fahrenden Zug abgefragt werden und antworten, das Antwortsignal aber nicht nur von dem auf diesem Nachbargleis fahrenden Zug, sondern auch von auf anderen Gleisen fahrenden Zügen mitgehört und fälschlicherweise aufgenommen wird.

Wenn auch das mithörende Abfragegerät das fremde Signal als nicht mit seinem eigenen Sendesignal übereinstimmend codiert erkennt und deshalb nicht auswertet, so kann durch dieses Signal doch der Empfang von für das jeweilige Fahrzeug bestimmten Signalen gestört und erheblich beeinträchtigt werden.

Es ist deshalb Aufgabe der Erfindung, eine Vorrichtung der o.g. Art so auszubilden, daß ein Mithören von Antwortsignalen, die aufgrund von Abfragen anderer Abfrageeinrichtungen abgegeben werden, verhindert wird.

Diese Aufgabe wird durch die im kennzeichnenden Teil des Patentanspruchs 1 angegebenen Merkmale gelöst.

Durch die vom Sender der Vorrichtung nach der Erfindung vorgenommene sprungcodierte Frequenzmodulation des Abfragesignals und einen vom Empfangsteil der Vorrichtung vorgenommen homodynen Empfang des Antwortsignales wird jedes Empfangssignal, das nicht exakt den Frequenzverlauf des Abfragesignals besitzt, schon in der Mischstufe des Empfängers ausgefiltert und stört bei der Decodierung des die Nutzinformation tragenden Basisbandsignales oder einer möglicherweise erforderlichen PN-Decodierung nicht.

Weiterbildungen der Erfindung sind in den Unteransprüchen angegeben.

So beschreiben die Ansprüche 2 und 3 eine einfache Möglichkeit zur Realisierung eines Frequenzsprunggenerators.

Anspruch 4 enthält eine Maßnahme, die sicherstellt, daß nicht zwei zufällig übereinstimmende Frequenzen in zwei unterschiedlichen Frequenzsprungmustern zur Anerkennung eines Datentelegrammes führen können.

Anspruch 5 ermöglicht ein "sanftes" Umschalten zwischen zwei Sprungfrequenzen. Hiermit wird der Anteil hoher, störender Frequenzen im Sendesignal reduziert.

Anspruch 6 betrifft die zusätzliche Anwendung einer Pseudo-Noise-Codierung, mit der in bekannter Weise eine Laufzeitfilterung zusätzlich durchgeführt und damit die Auswertung von Signalen von auf die eigene Abfrage antwortender entfernter Transponder unterdrückt werden kann.

Anhand zweier Figuren soll nun ein Ausführungsbeispiel der Vorrichtung nach der Erfindung ausführlich beschrieben werden.
- Fig. 1: zeigt schematisch ein Blockschaltbild der Vorrichtung nach der Erfindung.
- Fig. 2: zeigt ein mögliches Frequenzsprungschema.

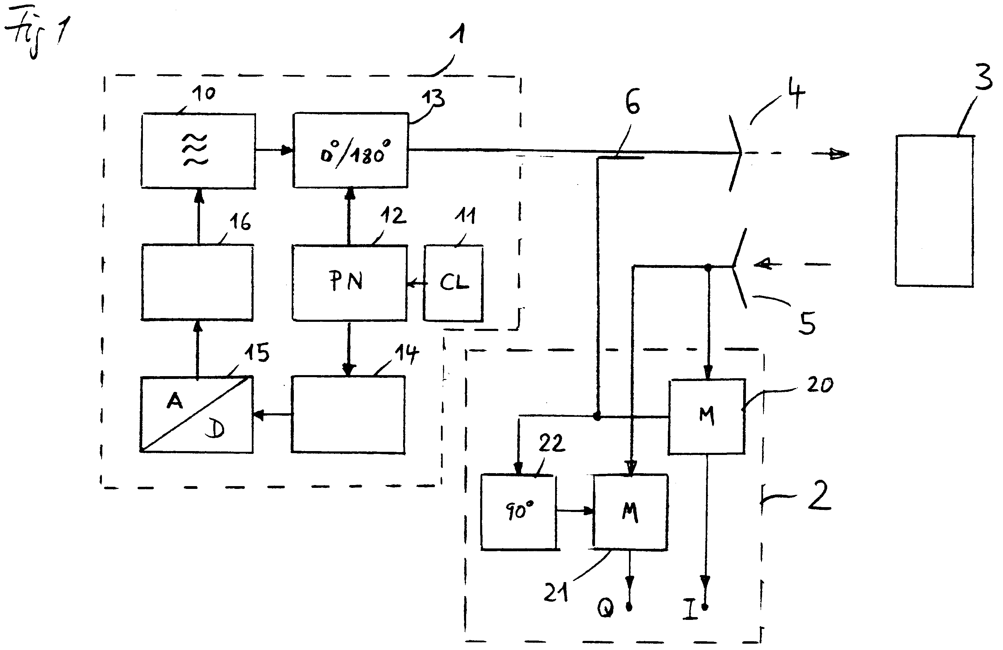

In Fig. 1 ist eine Vorrichtung nach der Erfindung dargestellt, die einen Sendeteil 1 und einen Empfangsteil 2 besitzt. Über eine Sendeantenne 4 wird ein Transponder 3 abgefragt. Dessen Antwortsignale gelangen über eine Empfangsantenne 5 in den Empfangsteil 2. Anstelle der Antennen 4 und 5 kann bei Frequenzen im GHz-Bereich auch eine einzige Antenne zum Einsatz kommen, an die Sendezweig und Empfangszweig über einen Zirkulator angeschlossen werden.

Im Sendeteil sorgt ein in seiner Frequenz steuerbarer Hochfrequenzgenerator 10 für ein hochfrequentes Abfragesignal. Dieses wird über einen Phasenmodulator 13 als Sendesignal auf die Sendeantenne 4 ausgegeben. Der Phasenmodulator 13 wird von einem Pseudo-Noise-Generator 12 angesteuert, der wiederum von einem Taktgeber 11 gesteuert wird. Das Sendesignal wird über einen Koppler 6 zwei im Empfangsteil angeordneten Eingangsmischern 20, 21 als Referenzsignal zugeführt. Der Empfangsteil ist damit nur für solche Antwortsignale empfindlich, die die Phasenmodulation des Sendesignals tragen. Über nicht dargestellte Verzögerungsglieder in der Referenzsignalzuführung kann die Signallaufzeit zum Transponder und zurück berücksichtigt werden. Damit können Entfernungstore geschaffen werden, die bewirken, daß nur Antwortsignale von Transpondern empfangen und ausgewertet werden, die sich in einer vorgegebenen Entfernung von der abfragenden Vorrichtung befinden.

Der Sendeteil 1 enthält weiterhin einen Frequenzsprunggenerator 14, dessen Ausgangssignal, eine Folge von Modulationsfrequenzen, über einen Digital/Analog-Wandler 15 und einen Integrator 16 einem Steuereingang des steuerbaren Hochfrequenzgenerators 10 zugeführt wird. Vom Frequenzsprunggenerator 14 ausgegebene Frequenzfolgen erzeugen eine Frequenzmodulation im Ausgangssignal des Hochfrequenzgenerators, die aufgrund des dessen Steuereingang vorgeschalteten Integrators nicht sprunghaft von einer Frequenz zur nächsten wechselt, sondern die eingestellten Frequenzen durch allmähliche lineare Übergänge einzustellen sucht, so daß sich eine sägezahnförmige Frequenzkurve ergibt.

Der Frequenzsprunggenerator 14 erhält einen im Pseudo-Noise-Generator 12 von der hohen Taktfrequenz des Taktgebers 11 aus heruntergeteilten Zeittakt. Er enthält im wesentlichen einen Prozessor und einen Speicher. Im Speicher sind z.B. 63 unterschiedliche Frequenzmuster mit einer unterschiedlichen Zahl von Schritten abgespeichert, die vom Prozessor nacheinander ausgelesen und dem D/A-Wandler zugeführt werden. Die Auswahl der einzelnen Muster kann zufällig sein oder sie kann der Reihe nach erfolgen.

Bei einem möglichen Frequenzhub von 4 MHz und einer minimalen Schrittweite von 7,8125 KHz stehen z.B. 513 verschiedene Frequenzen zur Verfügung, die in den Frequenzmustern statistisch oder nach einer eine gleichmäßige Verteilung sichernden Vorschrift verteilt werden können. Die Zeitspanne zwischen jeweils zwei aufeinanderfolgenden Frequenzen beträgt dann z.B. 128 µs und ist kürzer als die Dauer eines zur Datenübertragung zwischen Abfragevorrichtung und Transponder benutzten Datentelegrammes. Damit ist sichergestellt, daß auch bei zufälliger einmaliger Aufeinanderfolge zweier gleicher Sprungfrequenzen ein von einem fremd abgefragten Transponder eingehendes Datentelegramm nicht ausgewertet wird.

Im Empfangsteil 2 wird ein über die Empfangsantenne 5 eingehendes Antwortsignal des Transponders 3 den Mischern 20 und 21 zugeführt. Hierbei erhält der Mischer 20 sein Referenzsignal vom Koppler 6 direkt, der Mischer 21 erhält es über einen vorgeschalteten Phasenschieber 22 mit 90° phasenverschoben. Eventuelle, zur Bildung von Entfernungstoren vorgesehene Verzögerungsglieder sind in Fig. 1 nicht dargestellt. Die beiden Mischer arbeiten als homodyne Empfänger und geben nur solche Signale zur Weiterverwertung auf Ausgänge I und Q aus, die mit dem Sendesignal korreliert sind.

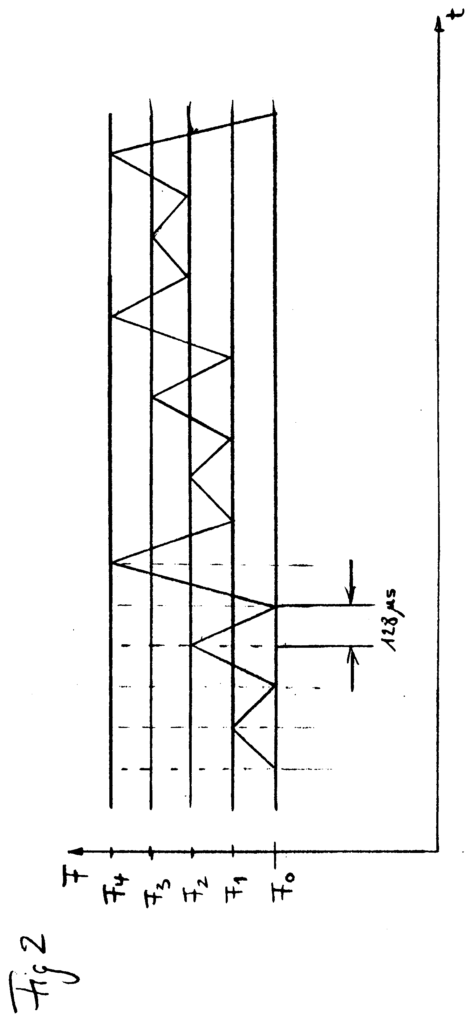

Fig. 2 enthält ein Frequenzsprungschema mit wenigen Frequenzen F₀ bis F₄. Es zeigt den sägezahnartigen Verlauf der Modulationsfrequenz. In Wirklichkeit werden solche Frequenzmuster mit bis zu über 10⁵ Frequenzschritten und bis zu 513 verschiedenen Frequenzen benutzt.

## Patentansprüche

1. Vorrichtung zum Erfassen und Auslesen von relativ zu dieser Vorrichtung beweglichen Transpondern (3), die codierte Information tragen, mit einer einen Sendeteil (1) und einen Empfangsteil (2) aufweisenden Sende- und Empfangseinheit, die ein hochfrequentes Abfragesignal über eine Antenne (4) abstrahlt und einen von einem auf die Frequenz des Abfragesignals abgestimmten Transponder (3) entsprechend dessen codierter Information modulierten, reflektierten Anteil dieses Abfragesignals als Empfangssignal aufnimmt, diesen demoduliert und das demodulierte Signal einer Auswerteeinheit zur Decodierung und Auswertung zuführt, **dadurch gekennzeichnet**, daß der Sendeteil der Sende- und Empfangseinheit einen steuerbaren Modulator enthält, der das Abfragesignal mit einem frequenzsprungcodierten Signal frequenzmoduliert und daß der Empfangsteil (2) eine eingangsseitige Mischstufe enthält, der das Ausgangssignal der Sendestufe oder ein von diesem abgeleitetes Signal als Referenzsignal zugeführt wird.

2. Vorrichtung nach Anspruch 1, dadurch gekennzeichnet, daß der Sendeteil zur Frequenzsprungcodierung einen digitalen Frequenzsprunggenerator (14) mit nachgeschaltetem Digital/Analog-Wandler (15) enthält.

3. Vorrichtung nach Anspruch 2, dadurch gekennzeichnet, daß der Frequenzsprunggenerator (14) im wesentlichen einen Prozessor und einen Speicher enthält und daß in dem Speicher eine Liste von vorgegebenen Frequenzmustern abgespeichert sind, die in einer vorgegebenen Reihenfolge oder durch zufälligen Einstich in die Liste nacheinander ausgewählt und dem Prozessor zur Ausgabe der jeweiligen Frequenzfolgen zugeführt werden.

4. Vorrichtung nach Anspruch 3, dadurch gekennzeichnet, daß die Dauer zwischen zwei aufeinanderfolgenden Frequenzänderungen innerhalb einer Frequenzfolge jeweils gleich und kürzer als die zeitliche Länge eines die Nutzinformation enthaltenden Datentelegrammes ist.

5. Vorrichtung nach einem der vorstehenden Ansprüche, dadurch gekennzeichnet, daß dem Digital/Analog-Wandler (15) ein Integrator (16) nachgeschaltet ist.

6. Vorrichtung nach einem der vorstehenden Ansprüche, dadurch gekennzeichnet, daß der Sendeteil (1) zusätzlich einen Pseudo-Noise Generator (12) und einen von diesem gesteuerten Phasenmodulator (13) enthält und daß der Empfangsteil (2) einen Pseudo-Noise-Decodierer enthält, dem das Ausgangssignal des Sendeteils (1) als Referenzsignal zugeführt wird.
